# EUROPEAN PATENT APPLICATION

(11) **EP 4 686 172 A1**
(43) Date of publication of application: **28.01.2026**
(21) Application number: 25190630.1
(22) Date of filing: 21.07.2025
(51) Int. Cl.: H04L 67/00

(54) **ADAPTIVE CONNECTION CONTROL AT LOAD BALANCER FOR CLOUD NATIVE APPLICATIONS**

(30) Priority: 25.07.2024 US 202418784792
(71) Applicant: Oracle International Corporation, Redwood City, CA 94065 (US)
(72) Inventor: Krishan, Rajiv, Redwood City, 94065 (US)
(74) Representative: D Young & Co LLP

(57) **Abstract**

Systems and methods are disclosed for implementing cloud native application load balancing. **In** certain embodiments, a method may comprise operating a cloud native application load balancing system to implement a process to impose application scaling-based connection limits on a cloud native (CN) application via a load balancer, including obtaining, at a load balancer controller (LBC), a set of connection limits for the CN application, the set of connection limits correlated to a scaling state of the CN application. The method may include configuring the load balancer to apply the set of connection limits for incoming connection requests directed to the CN application, obtaining, at the LBC, an indication of an update to the set of connection limits based on a change in the scaling state of the CN application, and controlling the load balancer to implement the update to the set of connection limits.

## Description

### TECHNICAL FIELD

Various embodiments of the present technology generally relate to improvements to load balancer operations for cloud native environments, such as Kubernetes^{®} (sometimes stylized as K8s) containerized software environments. More specifically, embodiments of the present technology relate to systems and methods for improved connection throttling for cloud native applications.

### BACKGROUND

A load balancer may be a device or service that distributes transport connections or network traffic dynamically across resources to support an application. For example, if multiple servers are hosting instances of an application and can service incoming traffic, the load balancer may be configured to distribute the traffic amongst the servers to spread the workload and improve the usage of resources.

In cloud native environments, such as a Kubernetes containerized software environment, resources for an application may be deployed as a cluster. A cluster may consist of a set of worker machines or servers called "nodes", which may run the containerized applications. The nodes may host "pods", that may be set of running software containers the implement the application. A load balancer may route traffic from outside of a cluster to the various worker nodes and pods within the cluster.

However, when a load balancer routes traffic to a cluster, certain information, such as the client source IP of the traffic, may not be provided to the worker nodes or application during connection setup. Thus, any throttling of connection requests (e.g., initial synchronization or SYN requests) based on source IP may not be viable or possible at the application pods in the backend. This can limit an application's ability to react to a malicious attack, such as a distributed denial of service (DDoS) attack meant to overwhelm an application and prevent it from providing service to legitimate clients. While application pods can wait for a TLS (transport layer security) handshake or signaling after the initial connection request to determine the client identity, the application may remain vulnerable to DDoS attacks where rogue clients can flood the application with too many initial connection requests that, when accepted, can lead to the application running out of resources or lead to denial of service.

In a cloud native environment, applications can scale based on traffic or CPU utilization, allowing the capacity of applications to grow dynamically. New replicas or instances of an application can increase the application's capacity to handle connections and traffic, but it may be undesirable to allow a rogue client or a single peer to drive the growth through malicious connections.

### SUMMARY

Particular aspects are set out in the appended independent claims. Various optional embodiments are set out in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various described approaches relate to provision of implementations of load balancing for cloud native applications that allow connection throttling.

Various embodiments herein relate to systems, methods, and computer-readable storage media for implementing adaptive connection control at a load balancer for cloud native applications. In an embodiment, a cloud native application load balancing system may comprise one or more processors, and a memory having stored thereon instructions that, upon execution by the one or more processors, cause the one or more processors to implement a process to impose application scaling-based connection limits on a cloud native (CN) application via a load balancer. The cloud native application load balancing system may obtain, at a load balancer controller (LBC), a set of connection limits for the CN application, the set of connection limits correlated to a scaling state of the CN application. The cloud native application load balancing system may configure the load balancer to apply the set of connection limits for incoming connection requests directed to the CN application, obtain, at the LBC, an indication of an update to the set of connection limits based on a change in the scaling state of the CN application, and control the load balancer to implement the update to the set of connection limits.

In some embodiments, the cloud native application load balancing system may obtain the set of connection limits as a rule set from a cloud operator of a cloud computing environment in which the CN application operates, access a control plane of the cloud computing environment to determine the scaling state of the CN application, and determine the set of connection limits with which to configure the load balancer based on the rule set and the scaling state. The cloud native application load balancing system may monitor the control plane for the change in the scaling state, and determine the update to the set of connection limits based on the rule set and the change in the scaling state. In some embodiments, the rule set includes a default maximum number of allowed connections for the CN application at a minimal scaling state, and a scaling factor identifying how much to increase the default maximum number of allowed connections for each increase in the scaling state. The rule set may also include a plurality of connection source parameters, including connection limits from all sources and connection limits for specific subnets, and a specified default maximum number of allowed connections and a specified scaling factor for each of the plurality of connection source parameters. In some embodiments, the cloud native application load balancing system may obtain the set of connection limits, further including accessing a control plane of a cloud computing environment in which the CN application operates to read metadata associated with a service of the CN application, the metadata including the set of connection limits. The cloud native application load balancing system may monitor the control plane for the indication of the update to the set of connection limits, the indication including an update in the metadata having the update to the set of connection limits in response to the change in the scaling state of the CN application. According to some embodiments, the cloud native application load balancing system may obtain the set of connection limits, further including receiving an application programming interface (API) call from the CN application, the API call including the set of connection limits. The cloud native application load balancing system may obtain the indication of the update to the set of connection limits, further including receiving a subsequent API call from the CN application including the update to the set of connection limits. In some embodiments, the API call and the subsequent API call comprise representational state transfer (REST) API calls.

In certain embodiments, a method may comprise operating a cloud native application load balancing system to implement a process to impose application scaling-based connection limits on a cloud native (CN) application via a load balancer, including obtaining, at a load balancer controller (LBC), a set of connection limits for the CN application, the set of connection limits correlated to a scaling state of the CN application. The method may include configuring the load balancer to apply the set of connection limits for incoming connection requests directed to the CN application, obtaining, at the LBC, an indication of an update to the set of connection limits based on a change in the scaling state of the CN application, and controlling the load balancer to implement the update to the set of connection limits.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein.
FIG. 1 is a diagram of a system configured to implement adaptive connection control at a load balancer for cloud native applications, in accordance with certain embodiments of the present disclosure;
FIG. 2 is a process flow diagram of a system configured to implement adaptive connection control at a load balancer for cloud native applications, in accordance with certain embodiments of the present disclosure;
FIG. 3 is a diagram of a system configured to implement adaptive connection control at a load balancer for cloud native applications, in accordance with certain embodiments of the present disclosure;
FIG. 4 is a process flow diagram of a system configured to implement adaptive connection control at a load balancer for cloud native applications, in accordance with certain embodiments of the present disclosure;
FIG. 5 is a process flow diagram of a system configured to implement adaptive connection control at a load balancer for cloud native applications, in accordance with certain embodiments of the present disclosure; and
FIG. 6 is a diagram of a system configured to implement adaptive connection control at a load balancer for cloud native applications, in accordance with certain embodiments of the present disclosure.

Some components or operations may be separated into different blocks or combined into a single block for the purposes of discussion of some of the embodiments of the present technology. Moreover, while the technology is amenable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

In the following detailed description of certain embodiments, reference is made to the accompanying drawings which form a part hereof, and in which are shown by way of illustration of example embodiments. It is also to be understood that features of the embodiments and examples herein can be combined, exchanged, or removed, other embodiments may be utilized or created, and structural changes may be made without departing from the scope of the present disclosure.

In accordance with various embodiments, the methods and functions described herein may be implemented as one or more software programs running on a computer processor or controller. Dedicated hardware implementations including, but not limited to, application specific integrated circuits, programmable logic arrays, and other hardware devices can likewise be constructed to implement the methods and functions described herein. Methods and functions may be performed by modules or nodes, which may include one or more physical components of a computing device (e.g., logic, circuits, processors, etc.) configured to perform a particular task or job, or may include instructions that, when executed, can cause a processor to perform a particular task or job, or any combination thereof. Further, the methods described herein may be implemented as a computer readable medium (such as a storage medium, transmission medium, or memory device) including instructions that, when executed, cause a processor to perform the methods.

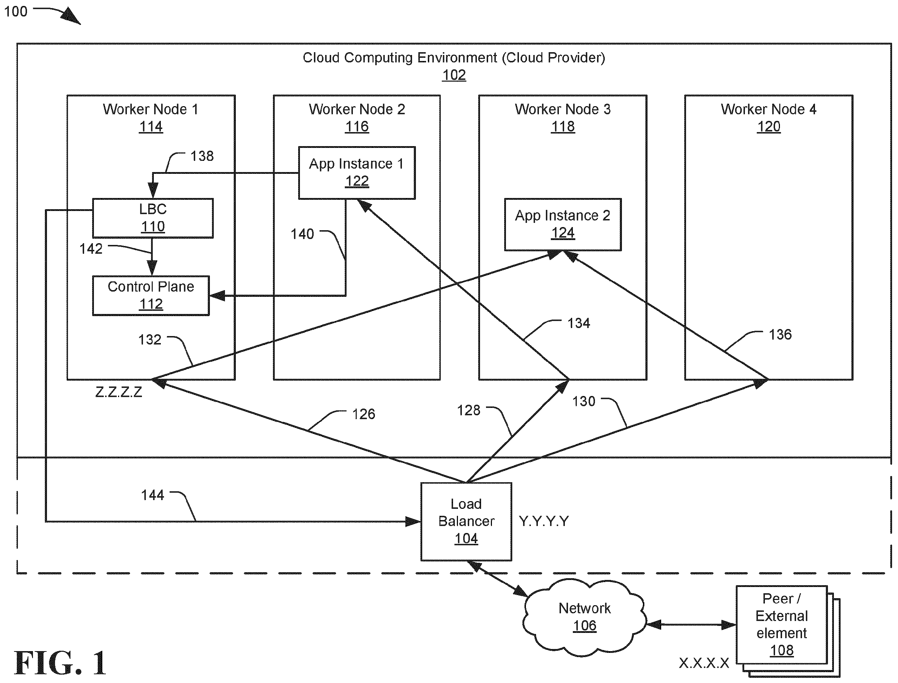

FIG. 1 depicts a diagram of a system 100 configured to implement adaptive connection control at a load balancer for cloud native applications, in accordance with certain embodiments of the present disclosure. The system 100 may include a cloud computing environment 102 hosted or provided by a cloud provider, a load balancer 104, one or more peers or external elements 108, and a network 106. The cloud computing environment 102 may include a plurality of worker nodes, such as worker node 1 114, worker node 2 116, worker node 3 118, and worker node 4 120. The worker nodes may host or execute one or more microservices, applications, or computing pods, such as application instance 122, application instance 124, a load balancer controller (LBC) 110, and a control plane 112. The elements of cloud computing environment 102 and load balancer (LB) 104 may communicate via various networking paths 126-144. Elements of system 100 may be implemented via computers, servers, hardware and software modules, or other system components. Elements of system 100 may also include or have access to one or more data storage devices, data storage mediums, data storage servers, and related data structures such as databases, which may store data files, executable code, or other information.

Cloud computing environment 102, which for example may include a Kubernetes environment, may include a system of servers or worker nodes 114-120 provided by a cloud provider that may host applications and services 110-112 and 122-124. In cloud computing environment 102, applications or microservices may be executed by pods, which may be a unit of computing, represented in system 100 as application instances 122-124. Applications hosted in a cloud computing environment 102 may be referred to as cloud native applications. The cloud native applications may be used for a variety of services, such as websites, content streaming services, and managing and processing communication streams for a mobile communications network provider. For example, external element 108 may include a communications device or networking component involved in a communication session. Media from external element 108 may be transmitted via network 106 (e.g., the internet or some other data network external to the cloud computing environment 102), at which point a load balancer 104 may distribute the network traffic or communications to a worker node 114-120 for servicing.

Load balancer 104 may distribute traffic amongst worker nodes 114-120 to balance or spread out workloads. Load balancer 104 may be implemented within the cloud computing environment 102, for example by itself being hosted on a worker node, or may be implemented as a service external to the cloud computing environment 102, for example on servers or computing equipment provided by a third party from the cloud provider.

The cloud-hosted nature of the applications and services allow for the dynamic scaling of applications based on demand or workload, for example by spawning additional replicas or instances of a given application, with each instance having access to a certain amount of resources of the worker nodes 114-116. For example, if app instance 1 122 on worker node 2 116 becomes busy, an additional instance of the same application, app instance 2 124, may be spawned on worker node 3 118. The workload for the application may then be distributed between app instance 1 122 on worker node 2 116 and app instance 2 124 on worker node 3 118. Control plane 112 may be a pod or containerized software instance orchestration layer that exposes the API (application programming interface) and interfaces to define, deploy, and manage the lifecycle of application pods or instances.

The implementation of certain cloud load balancers, including Kubernetes' out-of-cluster to internal routing, may lead to a loss of source IP information from peers 108 at the receiving application 122 during connection setup. For example, Kubernetes may employ two external traffic policies: externalTrafficPolicy = "cluster" or "local".

Using the "cluster" policy may enable reliable load-balancing among worker nodes 114, but may result in the client 108 source IP being lost during the load balancing. For example, a message may be sent from a peer 108 with an internet protocol (IP) address X.X.X.X toward the cloud computing environment 102, and arrive at load balancer 104. To force reverse path routing, the LB 104 may perform a source network address translation (SNAT) operation, which may replace the source IP address from the peer 108, X.X.X.X, with the IP address of the LB 104: Y.Y.Y.Y. Under the cluster policy, message routing may also include a second hop, where the initial target worker node routes a message to another worker node that hosts an instance of the target application. In this example, LB 104 may send the message along path 126 to worker node 1 114, which may use an IP virtual server (IPVS) to route the message along path 132 to application instance 2 124 in worker node 3 118. In order to force reverse path routing, the IPVS of worker node 1 114 may use a SNAT operation to replace the source IP (here, Y.Y.Y.Y of LB 104) with its own bridge IP address: Z.Z.Z.Z. Therefore, by the time app instance 2 receives the message, the source IP is indicated as Z.Z.Z.Z, rather than the X.X.X.X of the actual external element 108 that initiated the message. In similar examples, LB 104 may send additional traffic (possibly from a same rogue client or peer 108) along path 128 to worker node 3, which may forward it along path 134 to application instance 1 122 in worker node 2; and along path 130 to worker node 4 120, which may forward it along path 136 to app instance 2 124 in worker node 3 118. In each example, SNAT operations performed at the LB 104, and possibly at a first hop worker node 114-120, may obscure the original source IP address when the message is received at an application instance 122-124. Therefore, the application instance 122-124 may be unable to identify a true source of incoming messages, and cannot effectively respond to a DDoS attack. The cluster policy may therefore allow for effective load balancing, but obscures source IP addresses and hinders an effective response to attacks.

Under the "local" policy, the source IP address may be retained, and second-hop transmissions between worker nodes 114-120 may be avoided for LoadBalancer and NodePort type services, but traffic may be spread unevenly. For example, all traffic may be sent to app instance 2 124 while app instance 1 122 may remain idle. Due to the imbalance of traffic spreading, the local policy may not be the preferred choice of implementation in Kubernetes environments.

Similar aspects to the cluster and local policies may be enforced by various cloud load balancers when forwarding connection requests to worker nodes 114-120. The load balancer 104 may replace the source IP of the peer 108 with its own IP, to force routing on responses to follow the reverse path. This can cause a problem for elements on the backend (e.g., within cloud computing environment 102) to be unaware of the client's source information of connections. Thus, any throttling of connection requests (e.g., SYN requests) based on a source IP may not be possible at the application pods 122-124 in the backend.

A solution proposed herein allows dynamic control of the LB 104 for connection forwarding behavior based on a number of currently active replicas or instances of an application 122-124 and operator configurations. For example, with "N" application instances, the LB 104 may be configured to forward a maximum of "X" connections to the application, with a maximum of "Y" connections for a given source IP or subnet. The LB 104 may be provided a means to communicate with a cloud computing environment 102 cluster in order to monitor annotations for services or applications, determine services deployed of type LoadBalancer, and assign routable IP to the LoadBalancer service. Such communications can be through a load balancer controller (LBC) 110 service running in the cloud computing environment 102, or through direct communication with the control plane 112.

The LBC 110 may be a service running within the cloud computing environment 102 that may monitor or communicate with control plane 112, for example via communication path 142, in order to monitor the scaling of applications 122-124. For example, as an application scales up (e.g., by instantiating new replica pods or instances of the application) or scales down (e.g., by deleting or deactivating replica pods or instances), the scaling changes may be implemented and recorded via control plane 112, for example using communication path 140. The LBC 110 may therefore monitor application data, annotations, and similar information available via the control plane 112. In some examples, the LBC 110 may receive information directly from applications (e.g., via line 138) rather than or in addition to data received from control plane 112. The LBC 110 may use the received information to inform or control the behavior of LB 104 (e.g., via communication path 144). Various example implementations for cloud native application load balancing are provided herein, including implementations controlled by a cloud provider 102, and implementations controlled by an application 122-124.

In a cloud provider-based solution, the cloud provider 102 can enable LBC 110 to monitor control plane 112 for scaling of application services 122-124 and, based on operator configurations, update a set of connection policies for an application. The connection policies set by the cloud provider 102 may specify a maximum number of connections allowed for a given application, a maximum number of connections from a given subnet, or to set other restrictions. Further, the policies may specify how the maximum number of connections may be adjusted or scaled based on a number of application instances, thereby allowing a controlled or throttled connection limit that scales as the number of application replicas or instances scales. Based on the connection policies, the LBC 110 may configure connection control policy settings at the LB 104 for each application. Based on the configured settings, the LB may monitor incoming traffic or connection requests for the targeted application, and then look up the policies for that application. Based on the policies and the number of existing connections, the LB 104 may determine whether to allow the connection through (e.g., forward the request to the cloud computing environment 102), or reject the connection. Controlling maximum connections in this manner may prevent a rogue client from establishing too many connections and wasting resources or creating a denial-of-service situation.

In an application-based solution, an application 122 can provide specific connection configuration settings that allow the LB 104 to enforce defined connection limits. The connection configuration details may be provided via custom metadata or annotations for the application 122 (e.g., at control plane 112), or via custom messaging (e.g., to LBC 110).

In a first example app-based approach, an application 122 may include connection limit details in its service definition or annotations. For example, the application 122 can use an annotation or custom resource associated with its service to store connection configuration details. In Kubernetes, annotations may be used to attach arbitrary non-identifying metadata to objects, and clients such as tools and libraries can retrieve this metadata via the control plane 112. Upon scale out/in, the application 122 may update its service (or create or update a custom resource) definition, via connection 140, to publish or update additional annotations in its service at control plane 112 to adjust the connection limits. The LBC 110 (or in some examples, the load balancer 104 directly) may monitor the service resource for the application 122 at the control plane 112, via connection 142, to detect when the application 122 is created or scaled out or in. The LBC 110 may retrieve the annotation or custom resource for the application to determine the connection limits set by the application 122. Based on the connection limits information from the application 122, the LBC 110 may configure the LB 104, via connection 144, to monitor and limit or throttle connections according to the connection limit settings.

An example set of connection limit settings published by the application 122 may include:
connectionLimitConfig: '{ "maxConn" : 200, "filterset" : [{"subnet" : "10.233.0.0/16", "maxConn" : 50},{"subnet" : "10.243.10.10/32", "maxConn" : 10} ,{"subnet" : "*", "maxConn" : 200}]}'

In this example,
"maxConn" : 200 may mean that the application 122 supports a maximum of 200 connections, from any source.
"filterset" may apply more specific filters for selected subnets as described below.
"subnet" : "10.233.0.0/16", "maxConn" : 50 may mean that the application 122 allows a maximum of 50 connections from any IP in the subnet 10.233.0.0/16 (e.g., any IP address starting with 10.233.X.X).
"subnet" : "10.243.10.10/32", "maxConn" : 10 may mean that the application 122 allows a maximum of 10 connections from the exact IP address 10.243.10.10.
"subnet" : "*", "maxConn" : 200 may mean that the application 122 allows a maximum of 200 connection from any other subnet not specifically identified.

The maxConn value may be a global limit for the service, whereas the sum of the individual filter rules can be greater than or equal to the maxConn value. While in this example, the generic "subnet" limit was set equal to the maxConn value while more specific IP subnets were more limited, other embodiments are also possible. For example, the maxConn limit may be set to 200, and a specific subnet may allow 100 or even 200 connections, while the more generic subnet limit may be set to, e.g., 50. This may allow an application to give "preferential treatment" to selected subnets, allowing them to have a higher connection limit than generic, non-specified subnets.

Using the connection settings as described above, an application 122 can set its own desired limits on total connections and specific connections based on its current scaling value. When the application 122 scales up or out (e.g., by adding another instance 124), the application may update its custom resource or annotations (e.g., at control plane 112 via connection 140) with a new set of connection values, such as to increase the limits. Similarly, when the application 122 scales in or down (e.g., by removing an instance 124), it may update its custom resource or annotations to reduce the connection limits.

In a second example app-based approach, application 122 may utilize direct messaging, such as via a REST (representational state transfer) API call, to provide connection limit settings for the application to the LBC 110 (e.g., via connection 138). The application 122 may send a new API call when it scales out or in to provide updated connection limits. The connection limits may be provided in a format as described above for the previous example. Based on the connection limits information from the application 122, the LBC 110 may configure the LB 104, via connection 144, to monitor and limit or throttle connections according to the connection limit settings.

Regardless of how the connection limit settings are provided (e.g., via cloud provider 102 or application 122), the LBC 110 can monitor application 122 scaling and automatically configure the LB 104 to implement the connection limits. This may allow the cloud computing environment 102 to implement the "cluster" external traffic policy for superior load balancing, while still protecting against rogue clients and denial of service attacks. While the backend applications may still not be aware of the external element 108 IP address on initial connection requests, the risk of malicious attacks is addressed via connection throttling at the LB 104 according to the settings from the application 122 or cloud provider 102.

The LBC 110 may monitor and track the scaling of applications 122 (e.g., how many instances or replicas are active), and the LB 104 may manage how many connections have been established to an application in total and from a given subnet. Together, the LBC 110 and LB 104 may enforce the dynamically scaling connection settings established by the application 122 or cloud provider 102.

The application 122 or operator 102 can have control to define which set of connections are allowed to scale based on the scaling of application pods. The scaling of connection for a specific subnet can be linear, exponential, none, or any other function, based on operator configuration. For example, when an application scales to have new replicas, for certain subnets the max allowed connection limit may remain unchanged, whereas other subnets may receive higher connection limits. Even if an application 122 is unaware of the actual source IP of clients 108, based on operator configuration and dynamic scaling, it can configure the LB 104 to help in connection management.

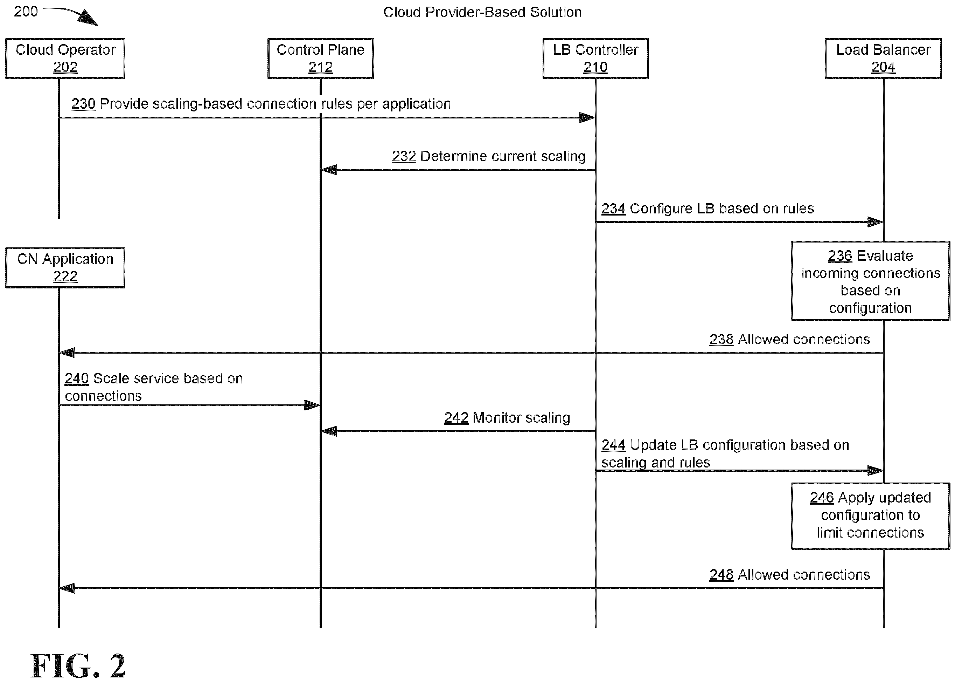

The proposed solution may apply for any type of TCP (transmission control protocol), UDP (user datagram protocol), SCTP (stream control transmission protocol), or other protocol traffic flows, and may apply to telecom and non-telecom deployments in cloud native environments. The suggested dynamic connection control may protect application against DDoS and other kinds of SYN attacks by configuring LB 104 with its connection management policies. An example process flow is described in regard to FIG. 2.

FIG. 2 is an example process flow diagram of a system 200 configured to implement adaptive connection control at a load balancer for cloud native applications, in accordance with certain embodiments of the present disclosure. In particular, FIG. 2 depicts a sequence of operations and data transfers between a cloud operator 202, a control plane 212, a load balancer controller (LBC) 210, a load balancer (LB) 204, and a cloud native (CN) application 222, which may correspond to cloud operator 102, control plane 112, LBC 110, LB 104, and application 122 of FIG. 1, respectively. Although not shown in FIG. 2 for the sake of clarity, information may also be exchanged between elements of system 200 and other elements of FIG. 1. The operations of system 200 may be an example method to implement cloud provider-based load balancer control for cloud native applications.

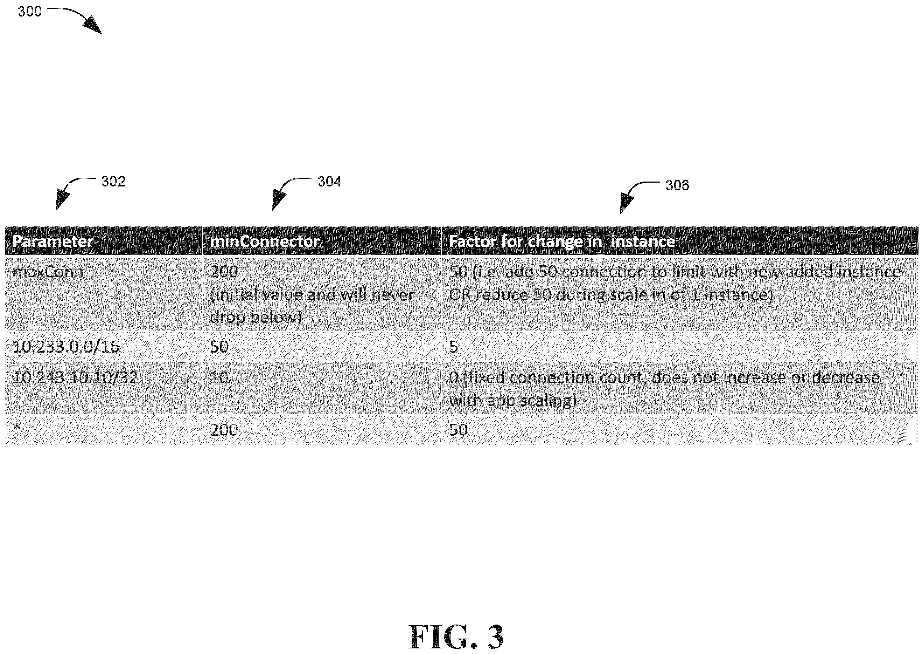

At 230, cloud operator 202 may provide a set of scaling-based connection rules or limits to LBC 210, for an application 222 in the cloud operator's environment. The cloud operator 202 may provide a distinct set of rules for each application 222, or may provide a same set of rules for multiple or all applications in the cloud computing environment. The cloud operator 202 may periodically update the rule set for an existing application, or may provide new rule sets for newly launched applications. An example set of connection rules will be described in greater detail in regard to FIG. 3.

At 232, the LBC 210 may determine a current scaling of application 222 by accessing control plane 212. At 234, the LBC 210 may apply the current scaling level of application 222 to the rule set received from the cloud operator 202 to determine the connection limits to apply based on the scaling, and configure the LB 204 with the appropriate connection limits.

The LB 204 may evaluate incoming connections based on the connection configuration from the LBC 210, at 236. For example, the LB 204 may first determine a target application for an incoming connection. When deploying an application, it may be assigned a unique target IP address, or in some cases a unique port (e.g., over a shared exposed IP, where the IP plus port combination identifies a given application flow from LB 204 towards the target application). Based on the target application identified in the incoming connection, the LB 204 may determine the connection rule set for the target application, determine how the number of existing connections to the target application compares to the rule set, and then determine whether the incoming connection request would cause the number of connections to violate any of the connection limits from the rule set. Connections that would violate the connection limits may be blocked at the LB 204.

At 238, connections that are allowed and do not violate the connection limits specified by the cloud operator 202 may be forwarded from the LB 204 to the CN application 222 (potentially involving SNAT IP address replacement and one or more worker node hops). Based on a number of active connections, a workload, or other factors, the CN application 222 may scale out/up or in/down, at 240. The scaling process may involve the CN application 222 making modifications or updates at the control plane 212.

At 242, the LBC 210 may continue to monitor the control plane 212 for scaling updates for CN application 222. The LBC 210 may monitor a number of pods or replicas of the CN application 222 via the control plane 212 to determine a scaling aspect of the CN application. When the LBC 210 identifies that the scaling for CN application 222 has changed, the LBC 210 may compare the CN application's current scaling against the scaling-based connection rules for the CN application received from the cloud operator 202 at 230. Based on the current scaling and the connection rules, the LBC 210 may update the connection configuration of the LB 204 for the CN application 222, at 244. At 246, the LB 204 may apply the updated connection configuration rules to incoming connections, including blocking connections that would violate the current rules, or allowing rule-compliant connections through to the CN application 222, at 248. An example scaling-based connection rule set or chart is described in regard to FIG. 3.

FIG. 3 depicts a diagram of a system configured to implement adaptive connection control at a load balancer for cloud native applications, in accordance with certain embodiments of the present disclosure. In particular, FIG. 3 shows a chart or table 300 detailing a scaling-based set of connection limits for a cloud native application 122 to be enforced by a load balancer 104 for a cloud computing environment 102, as depicted in FIG. 1. In some examples, the chart 300 may be a scaling-based ruleset provided from a cloud provider 102 to an LBC 110 in a cloud operator-based implementation, wherein the LBC 110 may monitor for application 122 scaling and interpret the scaling rules from the rule set to apply via the LB 104. In another example, the chart 300 may be a scaling-based ruleset configured by an operator at an application 122 in an application-based implementation. In the application-based implementation, the application 122 may interpret the scaling rules 300 based on the application's 122 current scaling level, and may update the control plane 112 or LBC 110 with the appropriate rules for the current scaling level. Other implementations are also possible. For example, in an application-based solution, an operator may configure custom connection rules for various scaling levels that do not follow a consistent or linear connection progression, as is shown in table 300.

The table 300 may include a 'parameter' column 302, which may define categories of connection limits to be applied by a load balancer. For example, the 'maxConn' parameter may define a category that establishes a maximum number of connections from any source or peer. In the depicted example, '10.233.0.0/16' and '10.243.10.10/32' parameters may define particular subnets or IP addresses to which specific or customized connection limits may be applied. The '*' parameter may be a generic subnet descriptor, so that any subnet not specifically identified in a 'parameter' entry of the chart 300 can still have a maximum connection limit applied.

The table 300 may include a 'minConnector' column 304, which may identify the base or minimum number of connections for the associated parameters 302 when the application associated with the table 300 is at a base or minimum scaling value (e.g., at a single instance or replica). The connection limits for each parameter may never drop below the value listed in the 'minConnector' column 304. In the depicted example, the 'maxConn' parameter may have a minimum connection limit of 200 connections, the '10.233.0.0/16' subnet parameter may have a minimum connection limit of 50 connections, the '10.243.10.10/32' IP address parameter may have a minimum connection limit of 10 connections, and the '*' subnet parameter may have a minimum connection limit of 200 connections. In this example, a single subnet (excluding those specifically defined with lower limits), defined by the '*' parameter, may utilize the full 200 connection limit defined by the 'maxConn' parameter, although other limits could be set (e.g., the '*' parameter may be set to have a minimum limit of 100 connections).

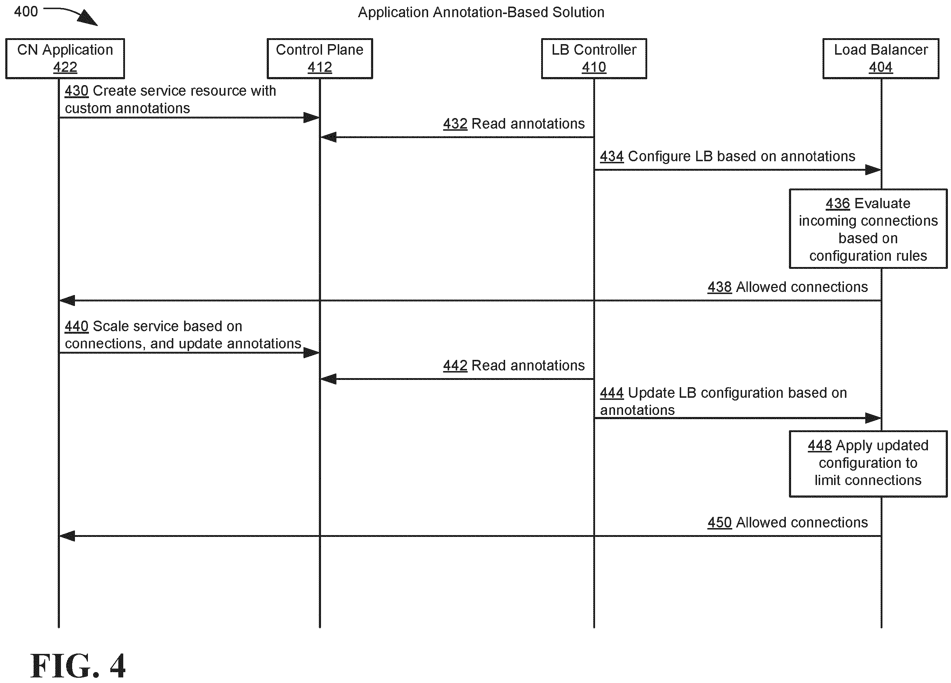

The table 300 may also include a "factor for change in instance" column 306, which may define a scaling factor to be applied to the 'minConnector' value 304 for each added instance or replica as the associated application scales. For the 'maxConn' parameter, the scaling value may be set to 50 connections, which means that 50 additional connections may be allowed for each additional instance or replica of the application added. So when the application scales to four total instances, it may allow the base 200 connections, plus 50x3 for the additional replicas, totaling 350 maximum connections. If the app then scaled down by 1 instance, the maximum connection limit may be reduce to 300. For the 10.233.0.0/16' subnet parameter, the scaling value may be set to 5, while the '10.243.10.10/32' IP address parameter may have a scaling factor of 0. This may mean that the maximum connections allowed for the 10.243.10.10/32' IP address is fixed at 10, and will never increase regardless of how much the application scales. For the '*' subnet parameter, the scaling factor may be set to 50, matching the 'maxConn' parameter scaling. An example process flow for an application annotation-based implementation is described in regard to FIG. 4.

FIG. 4 is an example process flow diagram of a system 400 configured to implement adaptive connection control at a load balancer for cloud native applications, in accordance with certain embodiments of the present disclosure. In particular, FIG. 4 depicts a sequence of operations and data transfers between a cloud native (CN) application 422, a control plane 412, a load balancer controller (LBC) 410, and a load balancer (LB) 404, which may correspond to application 122, control plane 112, LBC 110, and LB 104 of FIG. 1, respectively. Although not shown in FIG. 4 for the sake of clarity, information may also be exchanged between elements of system 400 and other elements of FIG. 1. In particular, the operations of system 400 may be an example method to implement application-based load balancer control utilizing application or service annotations or custom value parameters.

At 430, the CN application 422 may create a service resource with custom annotations or custom resource definitions via the control plane 412. The custom annotations or custom definitions may be used to specify connection limits for the application 422 to be applied by the LB 404.

At 432, the LBC 410 may read the annotations or custom resource definitions for the application 422 from the control plane 412. Based on the annotations, the LBC 410 may configure the LB 404 to apply the appropriate connection limits for the application 422, at 434. The LB 404 may evaluate incoming connections based on the configuration rules for the application 422, at 436. For example, the LB 404 may compare the incoming connection subnets against any specific subnet connection limits, and compare the maximum connection limits for the application 422 against the current number of connections. Connections that would violate the connection limits may be rejected, while connections that would not violate the connection limits may be sent to CN application 422, at 438.

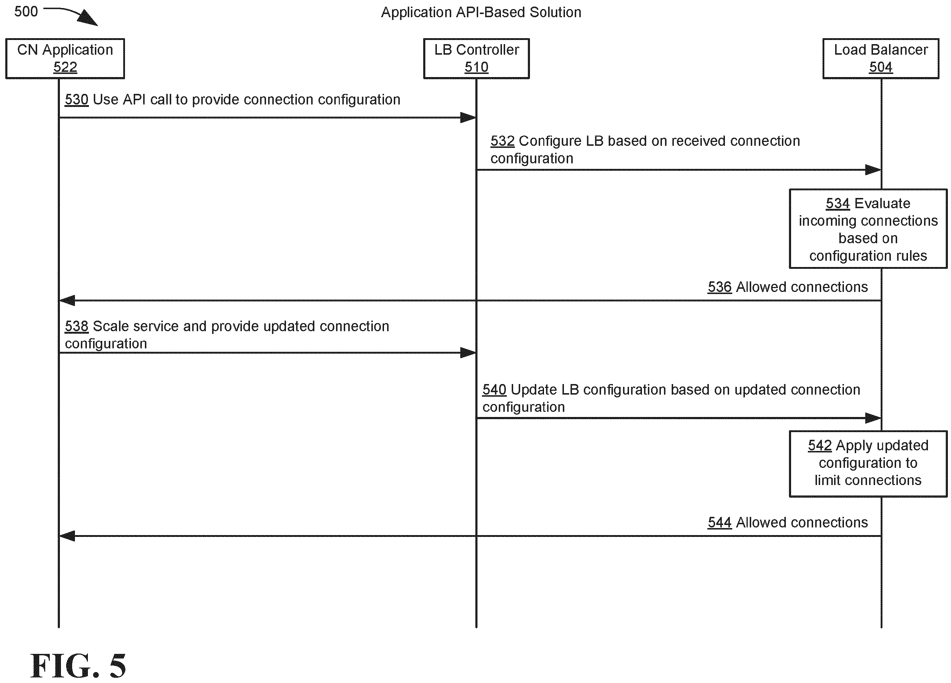

At 430, the CN application 422 may scale its service based on connections or workload, and update its annotations or custom resource definitions at the control plane 412. The updated annotations may include the connection limit rules for the application's 422 current scaling state. The LBC 410 may read the annotations from the control plane 412, at 442, and may update the LB 404 connection limit configuration for the application 422 based on the annotations, at 444. The LB 404 may apply the updated connection limit configuration to incoming connection requests, at 448. Connections that would violate the updated connection limits may be blocked or denied, while connections that would not violate the updated limits may be allowed to connect to CN application 422, at 450. An example process flow for an application API-based implementation is described in regard to FIG. 5.

FIG. 5 is an example process flow diagram of a system 500 configured to implement adaptive connection control at a load balancer for cloud native applications, in accordance with certain embodiments of the present disclosure. In particular, FIG. 5 depicts a sequence of operations and data transfers between a cloud native (CN) application 522, a load balancer controller (LBC) 510, and a load balancer (LB) 504, which may correspond to application 122, LBC 110, and LB 104 of FIG. 1, respectively. Although not shown in FIG. 5 for the sake of clarity, information may also be exchanged between elements of system 500 and other elements of FIG. 1. In particular, the operations of system 500 may be an example method to implement application-based load balancer control utilizing API calls or direct connections to the LBC 510.

At 530, CN application 522 may use an API call (such as a REST API call) to provide connection limit details to the LBC 510. The LBC 510 may configure the LB 504 with connection limits for the CN application 522 based on the received API call, at 532.

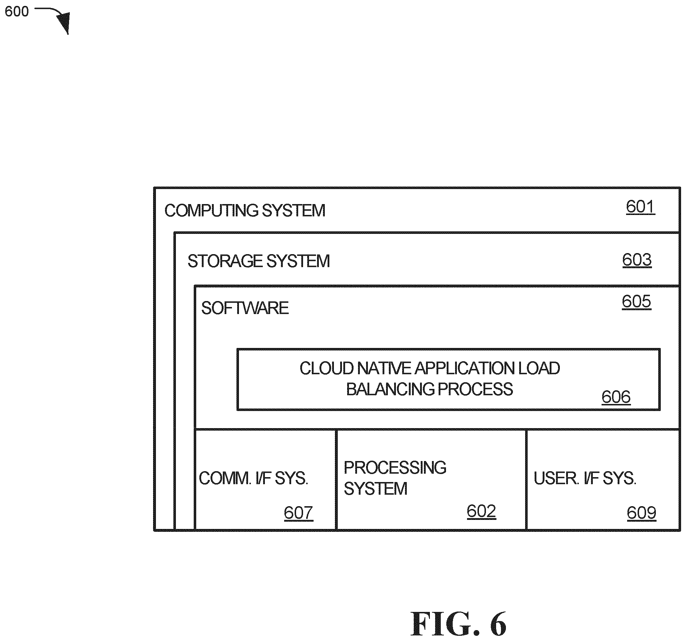

At 534, the LB 504 may evaluate incoming connections based on the received configuration rules, including rejecting connections that would violate the connection limits. Allowed connections may be forwarded from the LB 504 to the CN application 522, at 536. At 538, the CN application 522 may scale its service, and provide updated connection limit configuration information to the LBC 510 via an API call. The LBC 510 may update the LB 504 configuration based on the updated connection limits, at 540. At 542, the LB 504 may apply the updated connection configuration to limit the incoming connections, and may forward or allow connections that do not violate the connection limits, at 544. A computing system configured to perform the operations of the methods of the foregoing figures and descriptions is described in regard to FIG. 6.

FIG. 6 illustrates an apparatus 600 including a computing system 601 that is representative of any system or collection of systems in which the various processes, systems, programs, services, and scenarios disclosed herein may be implemented. For example, computing system 601 may be an example of cloud computing or Kubernetes environment 102, load balancer 104, worker node 114-120, network 106, or peer or external element 108 of FIG. 1, or any combination thereof. Examples of computing system 601 include, but are not limited to, desktop computers, laptop computers, server computers, routers, web servers, cloud computing platforms, and data center equipment, as well as any other type of physical or virtual server machine, physical or virtual router, container, and any variation or combination thereof.

Computing system 601 may be implemented as a single apparatus, system, or device or may be implemented in a distributed manner as multiple apparatuses, systems, or devices. Computing system 601 may include, but is not limited to, processing system 602, storage system 603, software 605, communication interface system 607, and user interface system 609. Processing system 602 may be operatively coupled with storage system 603, communication interface system 607, and user interface system 609.

Processing system 602 may load and execute software 605 from storage system 603. Software 605 may include and implement a cloud native application load balancing process 606, which may be representative of any of the operations for implementing dynamic and customizable scaling-based connection limits for cloud native applications via a load balancer, as discussed with respect to the preceding figures. When executed by processing system 602, software 605 may direct processing system 602 to operate as described herein for at least the various processes, operational scenarios, and sequences discussed in the foregoing implementations. Computing system 601 may optionally include additional devices, features, or functionality not discussed for purposes of brevity.

In some embodiments, processing system 602 may comprise a micro-processor and other circuitry that retrieves and executes software 605 from storage system 603. Processing system 602 may be implemented within a single processing device but may also be distributed across multiple processing devices or sub-systems that cooperate in executing program instructions. Examples of processing system 602 may include general purpose central processing units, graphical processing units, application specific processors, and logic devices, as well as any other type of processing device, combinations, or variations thereof.

Storage system 603 may comprise any memory device or computer readable storage media readable by processing system 602 and capable of storing software 605. Storage system 603 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 603 may also include computer readable communication media over which at least some of software 605 may be communicated internally or externally. Storage system 603 may be implemented as a single storage device but may also be implemented across multiple storage devices or sub-systems co-located or distributed relative to each other. Storage system 603 may comprise additional elements, such as a controller, capable of communicating with processing system 602 or possibly other systems.

Software 605 (including cloud native application load balancing process 606 among other functions) may be implemented in program instructions that may, when executed by processing system 602, direct processing system 602 to operate as described with respect to the various operational scenarios, sequences, and processes illustrated herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 605 may include additional processes, programs, or components, such as operating system software, virtualization software, or other application software. Software 605 may also comprise firmware or some other form of machine-readable processing instructions executable by processing system 602.

In general, software 605 may, when loaded into processing system 602 and executed, transform a suitable apparatus, system, or device (of which computing system 601 is representative) overall from a general-purpose computing system into a special-purpose computing system customized to implement the systems and processes as described herein. Indeed, encoding software 605 on storage system 603 may transform the physical structure of storage system 603. The specific transformation of the physical structure may depend on various factors in different implementations of this description. Examples of such factors may include, but are not limited to, the technology used to implement the storage media of storage system 603 and whether the computer-storage media are provided/configured as primary or secondary storage, as well as other factors.

For example, if the computer readable storage media are implemented as semiconductor-based memory, software 605 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 607 may include communication connections and devices that allow for communication with other computing systems (not shown) over communication networks (not shown). Examples of connections and devices that together allow for inter-system communication may include network interface cards, antennas, power amplifiers, radio-frequency (RF) circuitry, transceivers, and other communication circuitry. The connections and devices may communicate over communication media to exchange communications with other computing systems or networks of systems, such as metal, glass, air, or any other suitable communication media.

Communication between computing system 601 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof.

As will be appreciated by one skilled in the art, aspects of the presently taught approaches may be embodied as a system, method, computer program product, and other configurable systems. Accordingly, aspects of the presently taught approaches may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the presently taught approaches may take the form of a computer program product embodied in one or more computer readable medium(s). Such a computer readable medium may be provided by way of a memory devices or computer readable storage medium having computer readable program code embodied thereon. Examples of a computer-readable storage medium may include a CD, a DVD, a storage device, a diskette, a tape, flash memory, physical memory, or any other computer-readable storage medium. A computer-readable medium may also or alternatively be provided by way of a transmission medium by which instructions may be conveyed. A computer-readable transmission medium may include carrier waves, transmission signals or the like. A computer-readable transmission medium may convey instructions between components of a single computer system and/or between plural separate computer systems.

Unless the context clearly requires otherwise, throughout the description and the claims, the words "comprise," "comprising," "including," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. Except when used for the selection or determination between alternatives, the word "or" in reference to a list of two or more items covers all the following interpretations of the word: any of the items in the list, all the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology, and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or sub combinations. Each of these processes or blocks may be implemented in a variety of different ways. Also, while processes or blocks are at times shown as being performed in series, these processes or blocks may instead be performed or implemented in parallel, or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To provided conciseness as to the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

Therefore, from one perspective there have been described systems and methods for implementing cloud native application load balancing. In certain embodiments, a method may comprise operating a cloud native application load balancing system to implement a process to impose application scaling-based connection limits on a cloud native (CN) application via a load balancer, including obtaining, at a load balancer controller (LBC), a set of connection limits for the CN application, the set of connection limits correlated to a scaling state of the CN application. The method may include configuring the load balancer to apply the set of connection limits for incoming connection requests directed to the CN application, obtaining, at the LBC, an indication of an update to the set of connection limits based on a change in the scaling state of the CN application, and controlling the load balancer to implement the update to the set of connection limits.

Further examples of feature combinations taught by the present disclosure are set out in the following numbered clauses.

Clause 1. A cloud native application load balancing system, comprising: one or more processors; a memory having stored thereon instructions that, upon execution by the one or more processors, cause the one or more processors to implement a process to impose application scaling-based connection limits on a cloud native (CN) application via a load balancer, the process including: obtain, at a load balancer controller (LBC), a set of connection limits for the CN application, the set of connection limits correlated to a scaling state of the CN application; configure the load balancer to apply the set of connection limits for incoming connection requests directed to the CN application; obtain, at the LBC, an indication of an update to the set of connection limits based on a change in the scaling state of the CN application; and control the load balancer to implement the update to the set of connection limits.

Clause 2. The cloud native application load balancing system of clause 1, further comprising instructions that, upon execution, cause the one or more processors to: obtain the set of connection limits as a rule set from a cloud operator of a cloud computing environment in which the CN application operates; access a control plane of the cloud computing environment to determine the scaling state of the CN application; and determine the set of connection limits with which to configure the load balancer based on the rule set and the scaling state.

Clause 3. The cloud native application load balancing system of clause 2, further comprising instructions that, upon execution, cause the one or more processors to: monitor the control plane for the change in the scaling state; and determine the update to the set of connection limits based on the rule set and the change in the scaling state.

Clause 4. The cloud native application load balancing system of clause 3, further comprising: the rule set includes: a default maximum number of allowed connections for the CN application at a minimal scaling state; and a scaling factor identifying how much to increase the default maximum number of allowed connections for each increase in the scaling state.

Clause 5. The cloud native application load balancing system of clause 4, further comprising: the rule set includes: a plurality of connection source parameters, including connection limits from all sources and connection limits for specific subnets; and a specified default maximum number of allowed connections and a specified scaling factor for each of the plurality of connection source parameters.

Clause 6. The cloud native application load balancing system of any preceding clause, further comprising instructions that, upon execution, cause the one or more processors to: obtain the set of connection limits, further including: access a control plane of a cloud computing environment in which the CN application operates to read metadata associated with a service of the CN application, the metadata including the set of connection limits.

Clause 7. The cloud native application load balancing system of clause 6, further comprising instructions that, upon execution, cause the one or more processors to: monitor the control plane for the indication of the update to the set of connection limits, the indication including an update in the metadata having the update to the set of connection limits in response to the change in the scaling state of the CN application.

Clause 8. The cloud native application load balancing system of any preceding clause, further comprising instructions that, upon execution, cause the one or more processors to: obtain the set of connection limits, further including: receive an application programming interface (API) call from the CN application, the API call including the set of connection limits.

Clause 9. The cloud native application load balancing system of clause 8, further comprising instructions that, upon execution, cause the one or more processors to: obtain the indication of the update to the set of connection limits, further including: receive a subsequent API call from the CN application including the update to the set of connection limits.

Clause 10. The cloud native application load balancing system of clause 9, further comprising instructions that, upon execution, cause the one or more processors to: the API call and the subsequent API call comprise representational state transfer (REST) API calls.

Clause 11. A method comprising: operating a cloud native application load balancing system to implement a process to impose application scaling-based connection limits on a cloud native (CN) application via a load balancer, including: obtaining, at a load balancer controller (LBC), a set of connection limits for the CN application, the set of connection limits correlated to a scaling state of the CN application; configuring the load balancer to apply the set of connection limits for incoming connection requests directed to the CN application; obtaining, at the LBC, an indication of an update to the set of connection limits based on a change in the scaling state of the CN application; and controlling the load balancer to implement the update to the set of connection limits.

Clause 12. The method of clause 11 further comprising: obtaining the set of connection limits as a rule set from a cloud operator of a cloud computing environment in which the CN application operates; accessing a control plane of the cloud computing environment to determine the scaling state of the CN application; and determining the set of connection limits with which to configure the load balancer based on the rule set and the scaling state.

Clause 13. The method of clause 12 further comprising: monitoring the control plane for the change in the scaling state; and determining the update to the set of connection limits based on the rule set and the change in the scaling state.

Clause 14. The method of clause 12 or 13 further comprising: the rule set includes: a default maximum number of allowed connections for the CN application at a minimal scaling state; and a scaling factor identifying how much to increase the default maximum number of allowed connections for each increase in the scaling state.

Clause 15. The method of clause 14 further comprising: the rule set includes: a plurality of connection source parameters, including connection limits from all sources and connection limits for specific subnets; and a specified default maximum number of allowed connections and a specified scaling factor for each of the plurality of connection source parameters.

Clause 16. The method of any of clause 11 to 15 further comprising: obtaining the set of connection limits, further including: accessing a control plane of a cloud computing environment in which the CN application operates to read metadata associated with a service of the CN application, the metadata including the set of connection limits.

Clause 17. The method of clause 16 further comprising: monitoring the control plane for the indication of the update to the set of connection limits, the indication including an update in the metadata having the update to the set of connection limits in response to the change in the scaling state of the CN application.

Clause 18. The method of any of clauses 11 to 17 further comprising: obtaining the set of connection limits, further including: receiving an application programming interface (API) call from the CN application, the API call including the set of connection limits.

Clause 19. The method of clause 18 further comprising: obtaining the indication of the update to the set of connection limits, further including: receiving a subsequent API call from the CN application including the update to the set of connection limits.

Clause 20. The method of clause 19 further comprising: the API call and the subsequent API call comprise representational state transfer (REST) API calls.

## Claims

1. A cloud native application load balancing system, comprising:
one or more processors;
a memory having stored thereon instructions that, upon execution by the one or more processors, cause the one or more processors to implement a process to impose application scaling-based connection limits on a cloud native (CN) application via a load balancer, the process including:
obtain, at a load balancer controller (LBC), a set of connection limits for the CN application, the set of connection limits correlated to a scaling state of the CN application;
configure the load balancer to apply the set of connection limits for incoming connection requests directed to the CN application;
obtain, at the LBC, an indication of an update to the set of connection limits based on a change in the scaling state of the CN application; and
control the load balancer to implement the update to the set of connection limits.

2. The cloud native application load balancing system of claim 1, further comprising instructions that, upon execution, cause the one or more processors to:
obtain the set of connection limits as a rule set from a cloud operator of a cloud computing environment in which the CN application operates;
access a control plane of the cloud computing environment to determine the scaling state of the CN application; and
determine the set of connection limits with which to configure the load balancer based on the rule set and the scaling state.

3. The cloud native application load balancing system of claim 2, further comprising instructions that, upon execution, cause the one or more processors to:
monitor the control plane for the change in the scaling state; and
determine the update to the set of connection limits based on the rule set and the change in the scaling state.

4. The cloud native application load balancing system of claim 3, further comprising:
the rule set includes:
a default maximum number of allowed connections for the CN application at a minimal scaling state; and
a scaling factor identifying how much to increase the default maximum number of allowed connections for each increase in the scaling state.

5. The cloud native application load balancing system of claim 4, further comprising:
the rule set includes:
a plurality of connection source parameters, including connection limits from all sources and connection limits for specific subnets; and
a specified default maximum number of allowed connections and a specified scaling factor for each of the plurality of connection source parameters.

6. The cloud native application load balancing system of any preceding claim, further comprising instructions that, upon execution, cause the one or more processors to:
obtain the set of connection limits, further including:
access a control plane of a cloud computing environment in which the CN
application operates to read metadata associated with a service of the CN
application, the metadata including the set of connection limits.

7. The cloud native application load balancing system of claim 6, further comprising instructions that, upon execution, cause the one or more processors to:
monitor the control plane for the indication of the update to the set of connection limits, the indication including an update in the metadata having the update to the set of connection limits in response to the change in the scaling state of the CN application.

8. The cloud native application load balancing system of any preceding claim, further comprising instructions that, upon execution, cause the one or more processors to:
obtain the set of connection limits, further including:
receive an application programming interface (API) call from the CN application, the API call including the set of connection limits.

9. The cloud native application load balancing system of claim 8, further comprising instructions that, upon execution, cause the one or more processors to:
obtain the indication of the update to the set of connection limits, further including:
receive a subsequent API call from the CN application including the update to the set of connection limits.

10. The cloud native application load balancing system of claim 9, further comprising instructions that, upon execution, cause the one or more processors to:
the API call and the subsequent API call comprise representational state transfer (REST) API calls.

11. A method comprising:
operating a cloud native application load balancing system to implement a process to impose application scaling-based connection limits on a cloud native (CN) application via a load balancer, including:
obtaining, at a load balancer controller (LBC), a set of connection limits for the CN application, the set of connection limits correlated to a scaling state of the CN application;
configuring the load balancer to apply the set of connection limits for incoming connection requests directed to the CN application;
obtaining, at the LBC, an indication of an update to the set of connection limits based on a change in the scaling state of the CN application; and
controlling the load balancer to implement the update to the set of connection limits.

12. The method of claim 11 further comprising steps corresponding to the functionality of the instructions of any of claims 2 to 9.

13. A computer-readable medium comprising instructions which, when executed by one or more processors, cause one or more processors to carry out the method of claim 11 or 12.
